# EUROPEAN PATENT APPLICATION

(11) **EP 1 447 933 A2**
(43) Date of publication of application: **18.08.2004**
(21) Application number: 04002906.8
(22) Date of filing: 10.02.2004
(51) Int. Cl.: H04L 1/00, H04L 1/06

(54) **Adaptive wireless transmission/reception system and method**

(30) Priority: 12.02.2003 KR 2003008877
(71) Applicant: LG ELECTRONICS INC., Seoul (KR)
(72) Inventor: Kim, In-Kyoung, Seoul (KR)
(74) Representative: von Hellfeld, Axel, Dr. Dipl.-Phys.

(57) **Abstract**

An adaptive wireless control system and method combines an adaptive modulation and coding (AMC) technique and a transmit diversity (TD) technique. A channel state is periodically checked and a coding technique and a modulation technique that are most suitable to the checked channel state are applied to a system, to thereby enhance a quality of a receiving signal.

## Description

### BACKGROUND OF THE INVENTION

### 1. Field of the Invention

The present invention generally relates to communication systems, and more particularly to a wireless communication system which combines adaptive modulation and coding (AMC) and transmit divenity (TD).

### 2. Description of the Related Art

As mobile communication and terminal technologies evolve, data transmission speeds must be upgraded. More specifically, data transmission-centered wireless communication environments which transmit character or voice data based on relatively low-speed transfer rates must be upgraded to perform into a high-speed data transmissions for multimedia data.

In general, the quality of a receiving signal varies depending on the distance between a base station and terminal. In order to improve system performance, link adaptation may be performed to adjust a transmitted signal according to a position of a user (terminal) and a channel environment. Link adaptation includes fast power control (FPC) and adaptive modulation and coding (AMC).

The FPC maintains a constant service quality for each terminal irrespective of the distance between the base station and each terminal, by transmitting a weak signal to a terminal located close to the base station and a strong signal to a terminal located further away from the base station.

In the FPC, since a fixed modulation technique and code rate are applied to the worst channel, the transfer rate tends to be slow. If a single antenna is used, fading occurs due to various signaling paths. Fading may cause a null state which causes a sharp deterioration of a SN (Signal-to-Noise) ratio and degradation of an average transfer rate.

In the transmission method, similar to the FPC, the modulation technique and code rate are fixed and a single antenna is used. In a wireless environment which requires a certain transfer quality, the transmission method is used. However, since the modulation technique and the code rate are fixed according to an average channel environment or the worst channel environment, the transmission method, which has a low transfer rate, is not suitable for a high speed data transmission.

The AMC is a transmission technique which realizes high-speed data transmission by improving the low transfer rate. TD is another technique for improving such a low transfer rate.

AMC increases a transmission quantity by changing the modulation technique and the code rate according to a channel environment. In other words, when a channel environment is good, signal transmission is performed by a high order of modulation technique and a high code rate. When the channel environnement is not good, a signal is transmitted by a low order of modulation technique and a low code rate. As a result, AMC increases an average transmission efficiency in a cell by allowing a high-speed transmission service to be provided to a user in a good channel environment.

In implementing AMC, channel estimation is a consideration. If a bad channel environment were erroneously determined to be a good channel environment due to erroneous channel estimation, the base station would perform signal transmission at a high order of modulation technique and a high code rate, which would result in significant data loss.

The transmit diversity (TD) is a diversity technique for decreasing the null state while increasing transmission quantity using one antenna for reception and a plurality of antennas for transmission. More specifically, in TD, the base station transmits a signal using two of more antennas while the terminal receives a signal using one antenna, whereby a burden of the terminal is reduced and generation of the null state is restrained.

TD is divided into an open loop-based TD and a closed loop-based TD. Open loop-based TD refers to an STTD (Space Time Transmit Diversity) in which a signal is transmitted to some of a plurality of antennas. Closed loop-based TD refers to an STD (Selecting Transmit Diversity) in which a signal is transmitted to one antenna selected as having a good channel environment from the plurality of antennas.

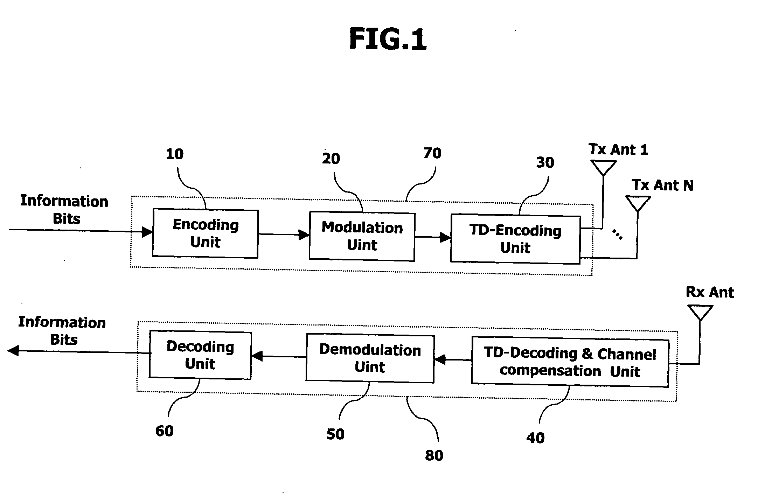

Figure 1 shows a related-art the TD-based wireless transmitting/receiving system. This system includes a transmitter 70 having a plurality of antennas and a receiver 80 having one antenna. As shown, the transmitter codes input information bit by means of an encoding unit 10 and sends the result to a modulation unit 20. The modulation unit modulates the coded signal. The modulated signal is then transferred to a TD-encoding unit 30, where it undergoes a coding process once again according to the TD technique (STTD or STD). The result is witelessly transmitted via plurality of antennas (Tx Ant1 - Tx AntN).

With STTD, the signal coded in the TD-encoding unit 30 is wirelessly transmitted via two antennas among the plurality of antennas (Tx Ant1 - Tx AntN), and with STD, the signal coded in the TD-encoding unit 30 is wirelessly transmitted via one of the antennas (Tx Ant1 - Tx AntN) selected as having a good channel environment.

The receiver transfers the signal collected by the reception antenna (Rx Ant) to the TD-decoding unit 40 and decodes it according to the TD (STTD or STD) and also performs channel compensation. The signal processed by the TD-decoding unit 40 is transmitted to and demodulated in a demodulation unit 50, and the result is transmitted to and decoded in the decoding unit 60 to restore the information bits.

In the related-art TD-based wireless transmitting/receiving system, channel estimation must be accurate to achieve a certain level of performance and the system is greatly affected by the channel environment. Also, the AMC-based wireless transmitting/receiving system has a problem of losing a large amount of data if the channel estimation is not properly made.

### SUMMARY OF THE INVENTION

An object of the present invention is to solve one or more problems of the related-art and/or to achieve at least one of the following advantages.

Anothet object of the present invention is to provide an adaptive wireless transmitting/receiving apparatus which adopts both an adaptive modulation coding technique and a transmit diversity technique.

Another object of the present invention is to provide an adaptive wireless transmitting/receiving method which varies an MCS (Modulation and Coding Scheme) of a system.

To achieve at least the above objects in whole or in parts, there is provided an adaptive wireless transmitting/receiving apparatus which in accordance with one embodiment includes: an MCS setting unit for periodically checking state information of a receiving channel and setting an optimum modulation and coding scheme (MCS) level; a transmitting unit for processing information bits according to a coding technique and a modulation technique of the set MCS level, and transmitting the processed signal according to a predetermined transmit diversity (TD) technique; and a receiving unit for processing a received signal according to the MCS and TD technique which have been set by the sending side.

Preferably, the transmitting unit includes a first encoding unit for coding the information bits according to the set coding technique; a modulation unit for interleaving and modulating the coded signal according to the set modulation technique; and a second encoding unit for coding the modulation signal and transmitting the coded signal through a plurality of transmission antennas according to a predetermined transmit diversity (TD) technique.

Preferably, the modulation unit includes a channel interleaving unit for interleaving the coded signal according to the set modulation technique; a mapping unit for constellation-mapping an output signal of the channel interleaving unit according to the set modulation technique; a Walsh modulation unit for converting the mapped signal into a Walsh code block; and a scrambling unit for scrambling the converted signal.

Preferably, the receiving unit includes a first decoding unit for decoding a diversity signal collected by a reception antenna according to a predetermined TD technique and performing channel compensation; a demodulation unit for demodulating an output signal of the first decoding unit; and a second decoding unit for map-decoding the demodulated signal to restore the original information bits.

Preferably, the demodulation unit includes: a descrambling unit for descrambling an output signal of the first decoding unit; a Walsh demodulation unit for demodulating the descrambled signal; a soft determining unit for determining which symbol region the demodulated signal belongs to; and a channel deinterleaving unit for deinterleaving an output signal of the soft determining unit.

Preferably, the MCS setting unit includes: a channel information extracting unit for periodically extracting channel state information from the first decoding unit; and a selecting unit for selecting an optimum MCS with reference to the extracted channel state information. Also, the channel state information is preferably related to an SN (Signal to Noise) ratio of a channel.

In accordance with another embodiment, an adaptive wireless transmitting/receiving method includes: an MCS setting step of periodically checking state information of a receiving channel and setting an optimum MCS; a transmitting step of processing information bits according to a coding technique and a modulation technique of the set MCS and transmitting the processed signal according to a predetermined transmit diversity (TD) technique; and a receiving step of processing a received signal and restoring original information bits according to the MSC and TD technique set by a sending side.

Preferably, the transmitting step includes: coding information bits according to the set coding technique; interleaving and modulating the coded signal according to a set modulation technique; coding the modulated signal and transmitting the coded signal to a plurality of transmission antennas.

Preferably, the receiving step includes: decoding a diversity signal collected by a reception antenna according to a predetermined transmit diversity (ID) technique and performing a channel compensation on the decoded signal; demodulating the compensated signal; and map-decoding the demodulated signal to restore original information bits.

### BRIEF DESCRIPTION OF THE DRAWINGS

Figure 1 is a schematic block diagram showing a structure of a related-art wireless transmitting/receiving system.

Figure 2 illustrates a structure of a wireless transmitting/receiving system in accordance with a preferred embodiment of the present invention.

Figure 3 illustrates a structure of a modulation unit in accordance with the preferred embodiment of the present invention.

Figure 4 illustrates a demodulation unit in accordance with the preferred embodiment of the present invention.

### DETAILED DESCRIPTION OF THE PREFERRED EMBODIMENTS

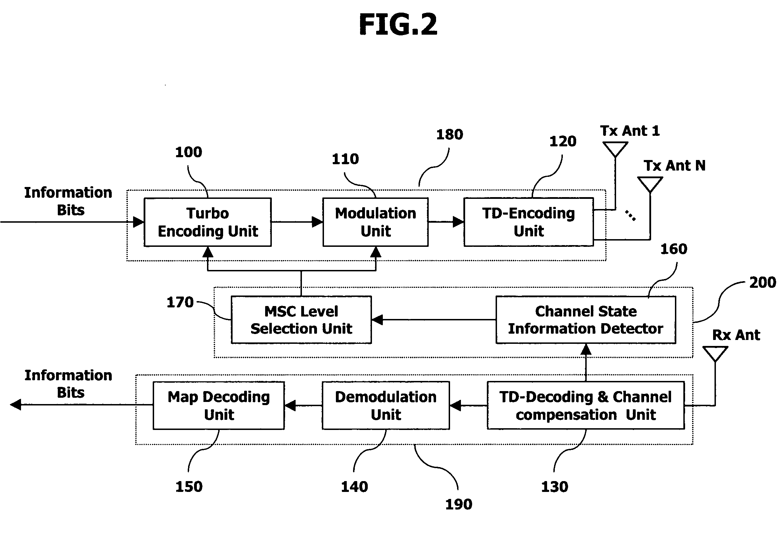

Figure 2 shows a wireless transmitting/receiving system in accordance with a preferred embodiment of the present invention. This system includes: a modulation and coding scheme (MCS) setting unit 200 for periodically checking state information of a receiving channel and setting a desired (e.g., optimum) modulation and coding scheme (MCS) level; a transmitting unit 180 for processing one or more information bits according to a coding technique and a modulation technique of the set MCS level and transmitting the processed signal according to a predetermined transmit diversity (TD) technique; and a receiving unit 190 for processing a received signal according to the MCS and TD technique set by a sending side and restoring original information bits.

The adaptive wireless transmitting/receiving system in accordance with the present invention periodically checks a channel state and applies an MCS level that is the most suitable to a corresponding channel state to itself.

**Table**

| MCS (level) | Code (rate) | Modulation (type) | SN ratio (dB) |
|---|---|---|---|
| 1 | 1/3 | QPSK | ≤3 |
| 2 | 2/3 | QPSK | 4 - 6 |
| 3 | 2/3 | 8PSK | 7 - 10 |
| 4 | 2/3 | 16QAM | ≥11 |

As shown in the Table, different coding and modulation techniques are applied according to a set MCS level. More specifically, if a SN ratio of a checked channel is less than or equal to 3dB, the MCS setting unit 200 sets the MCS level as 1 and transfers information on the MCS level to the transmitting unit 180. Then, the transmitting unit 180 applies a coding technique of a 1/3 code rate and a modulation technique of a QPSK to the system.

If the SN ratio of the checked channel is equal to or greater than or equal to 11dB, the MCS setting unit 200 sets the MCS level as 4 and transfers information on the MCS level to the transmitting unit 180. Then, the transmitting unit 180 applies a coding technique of a 2/3 code rate and a modulation technique of a 16QAM to the system.

In a worse channel state, a low level of MCS exhibits better performance, and in a better channel state, a high level of MCS exhibits better performance. The SN ratio applied to each MCS level is preferably a predetermined numerical value. (The SN ratios in the Table ate arbitrarily chosen for explanation. If desired, different values may be used to meet the requirements of an intended application or level of performance.) For example, while optional performance is highly desirable, the values may be selected to achieve some other level of performance.

The receiving unit 190 includes: a TD-decoding unit 130 for decoding a diversity signal collected by a reception antenna (Rx Ant) according to a predetermined transmit diversity (TD) technique (STTD or STD) and for performing a channel compensation; a demodulation unit 140 for demodulating an output signal of the TD-decoding unit 130; and a map decoding unit 150 for map-decoding the demodulated signal to restore information bits. The demodulation unit 140 and the map-decoding unit 150 are preferably operated in accordance with a modulation unit (or modulation technique) and a turbo encoding unit (or coding technique) of a transmitting side.

The MCS setting unit 200 includes: a channel information-extracting unit 160 for periodically extracting channel information of the TD-decoding unit 130; and an MCS level-selecting unit 170 for selecting an optimum MCS level with reference to the extracted channel information. The selected MCS level information is provided to the turbo encoding unit 100 and the modulation unit 110 of the transmitting unit 180. If the predetermined TD technique is STTD, an MCS level may be set for every receiving channel.

The transmitting unit 180 includes: the turbo encoding unit 100 for coding information bits according to the coding technique of the set MCS level; the modulation unit 110 for interleaving and modulating a coded output signal of the turbo encoding unit 100 according to the modulation technique of the set MCS level; and a TD-encoding unit 120 for coding an output signal of the modulation unit 110 and transmitting the coded signal through a plurality of transmission antennas (Tx Ant1- Tx AntN) according to a prescribed TD technique.

The TD-encoding unit 120 operates differently according to the TD technique. If the TD technique is STTD, an STTD decoder is added to the TD-encoding unit 120 to transmit a signal through several antennas. Meanwhile, if the TD technique is STD, the TD-encoding unit 120 selects one of the plurality of antennas, which has a good channel environment and transmits a signal to the selected antenna.

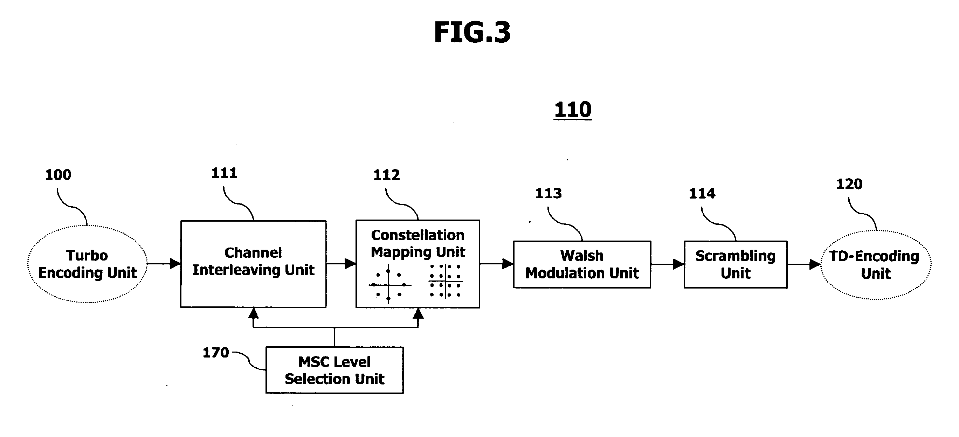

Figure 3 illustrates a structure of the modulation unit 110 and its interaction with the MCS level-selecting unit 170 in accordance with the preferred embodiment of the present invention. The modulation unit includes a channel interleaving unit 111 for performing an interleaving on the coded signal (that is, the output signal of the turbo encoding unit 100) according to the modulation technique of the MCS level set in consideration, of an actual channel environment; a constellation mapping unit 112 for constellation-mapping an output signal of the channel interleaving unit 111 according to the modulation technique of the set MCS level; a Walsh modulation unit 113 for converting an output signal of the constellation mapping unit 112 into a Walsh code block; and a scrambling unit 114 for scrambling the converted signal.

The channel interleaving unit 111 and the constellation mapping unit 112 operate according to the modulation technique of the MCS level selected by the MCS level selecting unit 170, so that an error occurrence rate is considerably reduced compared for example, to the related-art previously discussed and thus a transfer rate of the overall cell can be improved.

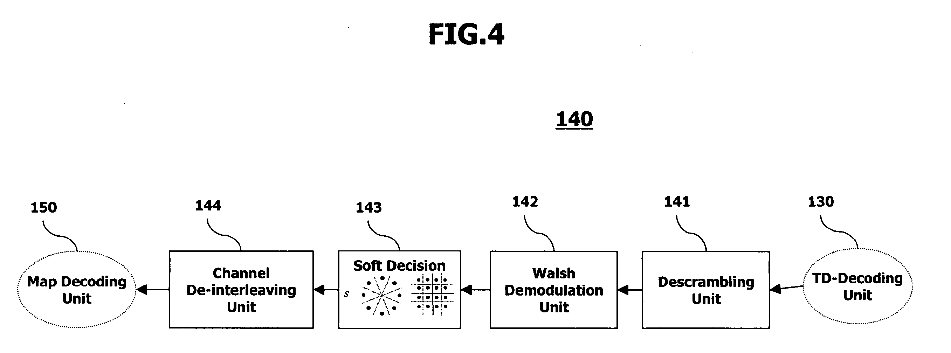

Figure 4 illustrates the demodulation unit 140 in accordance with the preferred embodiment of the present invention. Preferably, the demodulation unit corresponds to a modulation unit (or modulation technique) of the transmitting side. The demodulation unit includes: a descrambling unit 141 for restoring an output signal of the TD-decoding unit 130 to a pre-scrambled signal; a Walsh demodulation unit 142 for demodulating the descrambled signal; a soft determining unit 143 for determining which symbol region an output signal of the Walsh demodulation unit 142 belongs to; and a channel deinterleaving unit 144 for restoring an output signal of the soft determining unit 143 to a pre-interleaving signal. The demodulation unit 140 suitably demodulates a modulated signal according to a modulation technique of the transmitting side.

As so far described, the adaptive wireless transmitting/receiving system of the present invention has the following advantages. By combining the adaptive modulation and coding (AMC) technique and the transmit diversity (TD) technique, the adaptive wireless transmitting/receiving system measures a channel state periodically and adopts a coding technique and a modulation technique which are most suitable to the measured channel state, thereby greatly enhancing a quality of a receiving signal. In addition, a high transfer rate can be obtained in a multi-path channel environment in which a fading takes place frequently.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. An adaptive wireless transmitting/receiving apparatus comprising:
a setting unit which periodically checks state information of a receiving channel and sets a modulation and coding scheme (MCS) level based on the state information;
a transmitter which processes information bits according to a coding technique and modulation technique of the set MCS level, and transmits a signal including the processed bits according to a predetermined transmit diversity (TD) technique; and
a receiver which processes a received signal according to the MCS level and TD technique, which have been set by the transmitter.

2. The system of claim 1, wherein the transmitter comprises:
a first encoder which codes the information bits according to the set coding technique;
a modulator which interleaves and modulates the coded signal according to the set modulation technique; and
a second encoder which codes the modulation signal, wherein the coded signal is transmitted through a plurality of transmission antennas according to a predetermined transmit diversity (TD) technique.

3. The system of claim 2, wherein the modulator comprises:
a channel-interleaver which interleaves the coded signal according to the set modulation technique;
a mapper which performs constellation-mapping of an output signal of the channel-interleaver according to the set modulation technique;
a Walsh modulator which converts the mapped signal into a Walsh code block; and
a scrambler which scrambles the converted signal.

4. The system of claim 1, wherein the predetermined transmit diversity technique is a space time transmit diversity (STTD).

5. The system of claim 4, wherein the MCS setting unit sets an optimum MCS for every receiving channel.

6. The system of claim 1, wherein the predetermined transmit diversity technique is a selecting transmit diversity (STD).

7. The system of claim 1, wherein the receiver comprises:
a first decoder which for decodes a diversity signal collected by a reception antenna according to a predetermined TD technique and which performs a channel compensation;
a demodulator which demodulates an output signal of the first decoder; and
a second decoder which performs map-decoding of the demodulated signal to restore original information bits.

8. The system of claim 7, wherein the demodulator comprises:
a descrambler which descrambles an output signal of the first decoder;
a Walsh demodulator which demodulates the descrambled signal;
a soft determining unit for determining which symbol region the demodulated signal belongs to; and
a channel deinterleaver which deinterleaves an output signal of the soft determining unit.

9. The system of claim 7, wherein the demodulator is operated corresponding to a modulation unit of transmitter.

10. The system of claim 7, wherein the second decoder is operated corresponding to a first encoder of the transmitter.

11. The system of claim 1, wherein the setting unit comprises:
a channel information extractor which periodically extracts channel state information from the first decoder; and
a selector which selects an optimum MCS with reference to the extracted channel state information.

12. The system of claim 11, wherein the selector provides information on the selected MCS to the first encoder and to the modulator.

13. The system of claim 11, wherein the channel state information includes information indicative of an SN (Signal to Noise) ratio of a channel.

14. An adaptive wireless transmitting/receiving method comprising:
periodically checking state information of a receiving channel;
setting an MCS level based on the state information;
processing one or more information bits according to a coding technique and a modulation technique of the set MCS level;
transmitting a signal including the processed information bits according to a predetermined transmit diversity (TD) technique; and
receiving the transmitted signal and restoring original information bits according to the set MSC and TD technique.

15. The method of claim 14, wherein transmitting the signal comprises:
coding information bits according to the set coding technique;
interleaving and modulating the coded signal according to a set modulation technique; and
coding the modulated signal and transmitting the coded signal to a plurality of transmission antennas.

16. The method of claim 15, wherein modulating the coded signal step comprises:
interleaving the coded signal according to the set modulation technique;
constellation-mapping the interleaved signal according to the set modulation technique;
converting the mapped signal to a Walsh code block; and
scrambling the converted signal.

17. The method of claim 14, wherein the predetermined transmit diversity technique is a space time transmit diversity (STTD).

18. The method of claim 14, wherein the predetermined transmit diversity technique is a selecting transmit diversity (STD).

19. The method of claim 14, wherein receiving the transmitted signal comprises:
decoding a diversity signal collected by a reception antenna according to a predetermined transmit diversity (TD) technique and performing a channel compensation on the decoded signal;
demodulating the compensated signal; and
map-decoding the demodulated signal to restore original information bits.

20. The method of claim 19, wherein demodulating the compensated signal step comprises:
descrambling the compensated signal;
demodulating the descrambled signal;
determining which symbol region the demodulated signal belongs to; and
deinterleaving the determined signal.

21. The method of claim 19, wherein demodulating the compensated signal is performed in accordance with a modulation technique performed during transmission.

22. The method of claim 19, wherein map decoding is performed corresponding to a coding technique performed during transmission.

23. The method of claim 14, wherein the channel state information includes information indicative of an SN (Signal to Noise) ratio of the channel.

24. A method, comprising:
determining a state of a communications channel; and
setting an MCS level for transmitting a signal over the channel based on said state.

25. The method of claim 24, wherein said state indicates a signal-to-noise ratio of the channel.

26. The method of claim 25, wherein setting the MCS level includes:
setting different code rates for different signal-to-noise ratio values.

27. The method of claim 26, wherein a same modulation technique is set for the different code rates.

28. The method of claim 25, wherein setting the MCS level includes:
setting a same code rate for different signal-to-noise ratio values.

29. The method of claim 28, wherein different modulation techniques are set for the same code rate.

30. The method of claim 29, wherein the signal is transmitted over the channel based on a predetermined transmit diversity technique.

31. The method of claim 30, wherein the transmit diversity technique is a space time transmit diversity technique.

32. The method of claim 30, wherein the transmit diversity technique is a selecting transmit diversity technique.

33. An apparatus, comprising:
a detector which detects a state of a communications channel; and
a controller which sets an MCS level for transmitting a signal over the channel based on said state.

34. The apparatus of claim 33, wherein said state indicates a signal-to-noise ratio of the channel.

35. The apparatus of claim 34, wherein the controller sets different code rates for different signal-to-noise ratio values.

36. The apparatus of claim 35, wherein the controller sets a same modulation technique for the different code rates.

37. The apparatus of claim 34, wherein the controller sets a same code rate for different signal-to-noise ratio values.

38. The apparatus of claim 37, wherein the controller sets different modulation techniques for the same code rate.
